# FASCICULE DE BREVET EUROPEEN

(11) **EP 1 526 138 B1**
(45) Date de publication et mention de la délivrance du brevet: **26.03.2008**
(21) Numéro de dépôt: 04292480.3
(22) Date de dépôt: 19.10.2004
(51) Int. Cl.: C07F 9/40, C08G 73/00

(54) **Procédé de préparation de polyalcoaxyamines utilisables comme amorceurs pour la polymérisation radicalaire de (co)polymères vivants polyfonctionnels**
Verfahren zur Herstellung von Polyalkoxyaminen zur Verwendung als Initiatoren radikalischer Polymerisationen von polyfunktionellen lebenden Polymeren
Process for the preparation of polyalkoxyamines or use as initiators of radical polymerizations of polyfunctional living polymers

(30) Priorité: 24.10.2003 FR 0312452
(43) Date de publication de la demande: 27.04.2005
(73) Titulaire: ARKEMA FRANCE, 92700 Colombes (FR)
(72) Inventeur: Magnet, Stéphanie, 64370 Morlanne (FR); Guerret, Olivier, 64230 Mazerolles (FR); Couturier, Jean-Luc, 69006 Lyon (FR)
(74) Mandataire: Bonnel, Claudine

(56) Documents cités:
- WO-A-00/49027
- WO-A-00/71501
- LE MERCIER ET AL.: "Design and Use of .beta.-Phosphorous Nitroxides and Alkoxyamines in Controlled/"Living" Free Radical Polymerizations" MACROMOLECULAR SYMP., vol. 182, 2002, pages 225-247, XP002276032

## Description

La présente invention a pour objet des polyalcoxyamines obtenues à partir de monoalcoxylamines et de composés polyfonctionnels, utilisables notamment comme amorceurs des polymérisations radicalaires pour la synthèse de copolymères vivants polyfonctionnels.

Les développements récents de la polymérisation radicalaire contrôlée ont mis en évidence l'intérêt de polyalcoxyamines telles que décrites dans Accounts of Chemical Research, 1997, 30, pages 373-382.

Ces polyalcoxyamines, sous l'effet de la chaleur, en présence d'une oléfine polymérisable par voie radicalaire, amorcent la polymérisation tout en permettant de la contrôler.

Le mécanisme de ce contrôle peut être schématisé comme ci-après : 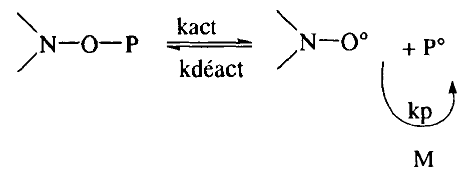 avec M représentant une oléfine polymérisable et P la chaîne polymérique en croissance.

La clé du contrôle est liée aux constantes k_{déact}, k_{act} et kₚ (T. Fukuda et A. Goto, Macromolécules 1999, 32, pages 618 à 623). Si le rapport k_{déact} / k_{act} est trop élevé, la polymérisation est bloquée, tandis que lorsque le rapport kₚ / k_{déact} est trop important, ou lorsque le rapport k_{déact} / k_{act} est trop faible, la polymérisation n'est pas contrôlée.

P. Tordo et al., Polym. Prep. 1997, 38, pages 729 et 730 ; et C.J. Hawker et al., Polym. mater. Sci. Eng., 1999, 80, pages 90 et 91 ont constaté que des alcoxyamines β-substituées permettent d'amorcer et de contrôler efficacement la polymérisation de plusieurs types de monomères, alors que les alcoxyamines dérivées de TEMPO [telles que le (2',2',6',6'-tétramétyl-1'-pipéridinyloxy)méthyl benzène mentionnées dans Macromolecules 1996, 29, pages 5245-5254] ne contrôlent dans des conditions industrialisables que les polymérisations des dérivés styréniques.

Dans WO 00/71501, les polyalcoxyamines permettent de synthétiser des polymères et des copolymères aux architectures bien définies. Pour n=2 (dialcoxyamine), il est possible de synthétiser des copolymères tribloc, chaque bloc étant issu de monomères aussi différents que les acrylates d'alkyle et/ou les dérivés styréniques, avec un excellent contrôle de la polymérisation et de la polydispersité et avec des temps de réaction de polymérisation très courts.

Ainsi, par exemple, il est possible de polymériser successivement deux monomères M1 et M2 :

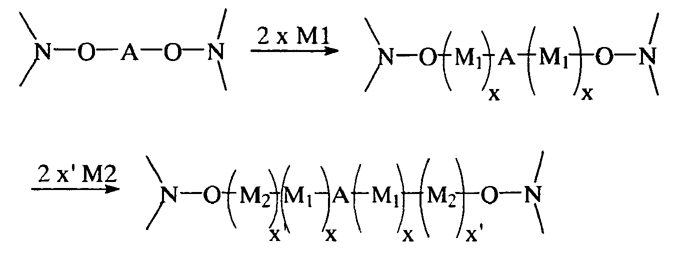

A titre d'exemple, M1=acrylate d'alkyle et M2=styrène.

A partir d'une trialcoxyamine (n=3), on obtiendra des polymères dits en étoile.

Les polyalcoxyamines peuvent être synthétisées par différentes méthodes. Une méthode implique la réaction d'un dérivé halogéné A(X)ₙ en présence d'un système organométallique comme CuX/ligand (X=Cl ou Br) selon une réaction de type ATRA (Atom Transfer Radical Addition) tel que décrit par D. Greszta et coll. dans Macromolecules 1996, 29, 7661-7670. Un procédé de ce type est décrit dans WO 00/71501 au nom de la demanderesse. Une autre méthode implique la réaction d'une alcoxyamine fonctionnelle, par exemple porteuse d'une fonction alcool, avec un polyacide ou un polychlorure d'acide comme décrit par exemple par C.J. Hawker dans Accounts of Chemical Research 1997, 30, 373-382. Ces méthodes présentent l'inconvénient d'utiliser des réactifs qu'il faut synthétiser en une ou plusieurs étapes (composés polyhalogénés, alcoxyamines fonctionnelles) et de nécessiter des étapes de purification plus ou moins complexes. Par ailleurs, les intermédiaires de ces synthèses peuvent être des produits nouveaux ce qui nécessite des mises au point et des adaptations et/ou modifications voire même remplacement complet des outils industriels ce qui n'est pas favorable à la mise en oeuvre de telles synthèses à l'échelle industrielle.

C.J. Hawker a également décrit dans Accounts of Chemical Research 1997, 30, 373-382 la préparation d'une polyalcoxyamine par oligomérisation d'une alcoxyamine fonctionnelle porteuse d'une double liaison styrénique. Cependant le fait que les stabilités thermiques de la polyalcoxyamine et de l'alcoxyamine initiale soient équivalentes rendent le contrôle de la synthèse de la polyalcoxyamine très difficile du fait de la formation concomitante de gels. Ainsi, la préparation de polymères vivant polyfonctionnels a également été envisagée par addition d'un polymère vivant monofonctionnel sur des vinylbenzènes polyfonctionnels (voir par exemple P. Chaumont dans Macromolecules (2001), 34(12), 4109-4113), mais en procédant ainsi, les auteurs caractérisent des produits gélifiés du fait de la réticulation.

La demanderesse a mis au point un nouveau procédé de préparation des polyalcoxyamines utilisant des réactifs aisément disponibles, ne nécessitant pas d'étape de purification et pouvant être réalisé in situ avant l'utilisation en polymérisation de ces polyalcoxyamines (voir ci-dessous).

Ce procédé consiste à faire réagir une ou plusieurs alcoxyamines de formule (I) 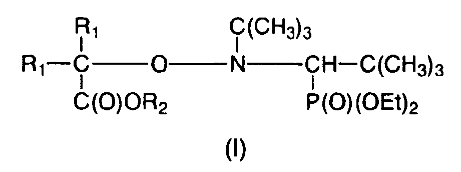 dans laquelle R₁ représente un radical alkyle, linéaire ou ramifié, ayant un nombre d'atomes de carbone allant de 1 à 3, R₂ représente un atome d'hydrogène, un radical alkyle, linéaire ou ramifié, ayant un nombre d'atomes de carbone allant de 1 à 8, un radical phényle, un métal alcalin tel que Li, Na, K, un ion ammonium tel que NH₄⁺, NBu₄⁺, NHBu₃⁺ ; de préférence, R₁ est CH₃ et R₂ est H ;
avec au moins un composé polyinsaturé de formule (II) : 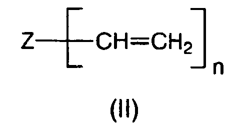 dans laquelle Z est un groupement aryle ou peut être représenté par la formule Z₁-[X-C(O)]ₙ où Z₁ représente une structure polyfonctionnelle provenant par exemple d'un composé de type polyol, X est un atome d'oxygène, un atome d'azote porteur d'un groupement carboné ou d'un atome d'hydrogène, un atome de soufre et n est un nombre entier supérieur ou égal à 2,
en présence ou non de solvant(s), de préférence choisi(s) parmi les alcools comme l'éthanol, les solvants aromatiques, les solvants chlorés, les éthers, les solvants polaires aprotiques,
à une température comprise en général entre 0 et 90°C, de préférence comprise entre 25 et 80 °C,
le ratio molaire entre monoalcoxyamine(s) de formule (I) et composé(s) polyinsaturé(s) de formule (II) étant compris entre 1,5 et 1,5n, de préférence entre n et 1,25n,
cette étape étant éventuellement suivie par une étape d'évaporation du ou des éventuels solvants.

Le composé polyinsaturé peut être choisi parmi les vinylbenzènes polyfonctionnels (Z = groupement aryle) ou parmi les dérivés acryliques polyfonctionnels (Z = Z₁-[X-C(O)]ₙ) De préférence, le composé insaturé est le divinylbenzène, le trivinylbenzène, l'éthylène glycol diacrylate, le 1,3-butanediol diacrylate, le 1,4-butanediol diacrylate, le 1,6-hexanediol diacrylate, le néopentyl glycol diacrylate, le cyclohexane diméthanol diacrylate, le diéthylène glycol diacrylate, le triéthylène glycol diacrylate, le tétraéthylène glycol diacrylate, le dipropylèneglycol diacrylate, le tripropylèneglycol diacrylate, les polyéthylène glycol diacrylates (commercialisés par Sartomer sous les dénominations SR259, SR344, SR610), les hexanediol diacrylates alcoxylés (commercialisés par Sartomer sous les dénominations CD561, CD564, CD560), le bisphénol-A diacrylate, les bisphénol A diacrylate éthoxylés (commercialisés par Sartomer sous les dénominations SR349, SR601, SR602, CD9038), le triméthylolpropane triacrylate, le pentaérythritol triacrylate, le tris(2-hydroxyéthyl)isocyanurate triacrylate, les triméthylolpropane triacrylate éthoxylés (commercialisés par Sartomer sous les dénominations SR454, SR499, SR502, SR9035, SR415), le glycéryl triacrylate propoxylé (commercialisés par Sartomer sous la dénomination SR9020), les triméthylolpropane triacrylate propoxylés (commercialisés par Sartomer sous les dénominations SR492 et CD501 chez Sartomer), le pentaérythritol tétraacrylate, le di-triméthylolpropane tétracrylate, le pentaérythritol tétraacrylate éthoxylé (commercialisé par Sartomer sous la dénomination SR494), le dipentaérythritol pentacrylate, les caprolactones modifiées dipentaérythritol hexaacrylate (commercialisés par Sartomer sous les dénominations Kayarad DCPA 20 et DCPA60) ou dipentaérythritol pentacrylate (commercialisé par UCB Chemicals sous la dénomination DPHPA).

La spécificité du procédé de préparation des polyalcoxyamines réside dans le fait que les alcoxyamines de formule (I) peuvent produire, dès la température ambiante, des radicaux : 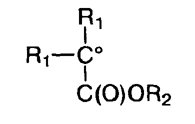 qui peuvent s'additionner sur le composé polyinsaturé Z-(CH=CH₂)ₙ pour donner de nouveaux radicaux qui vont se recombiner avec le nitroxyde généré simultanément dans le milieu réactionnel : 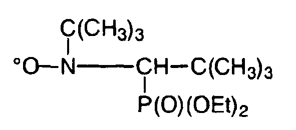 pour donner les polyalcoxyamines porteuses de fonctions : 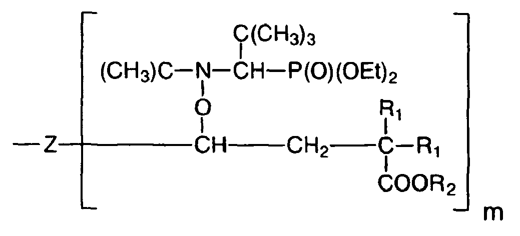 où m est un entier inférieur ou égal à n et supérieur ou égal à 2,
qui présentent l'avantage d'être stables jusqu'à 80°C.

La différence de stabilité thermique entre les alcoxyamines (I) et les polyalcoxyamines formées permet d'éviter la formation de gels qui serait entraînée par la polymérisation de (II).

Les composés sont obtenus tels quels soit par évaporation par exemple sous pression réduite et sont identifiés par spectrométrie de masse et par RMN du ¹H, du ¹³C et du ³¹P.

La présente invention a également pour objet un procédé de préparation de (co)polymères vivants polyfonctionnels par polymérisation d'un ou plusieurs monomères vinyliques en présence des polyalcoxyamines préalablement préparées selon le procédé décrit ci-dessus. Ce procédé de polymérisation permet d'accéder à des (co)polymères à architectures macromoléculaires contrôlées ((co)polymères blocs à structure linéaire, étoilée, ou hyperbranchée....) à partir d'une unique famille de monoalcoxyamines.

Un tel procédé peut également être appliqué pour préparer le mélange d'alcoxyamines conduisant à des polymères vivants multimodaux tels que décrits dans EP1.142.913 A1 au nom de la demanderesse.

Dans WO 00/71501, la demanderesse a montré que les polyalcoxyamines permettent de synthétiser des polymères et des copolymères aux architectures bien définies. Pour n=2 (dialcoxyamine), il est possible de synthétiser des copolymères tribloc, chaque bloc étant issu de monomères aussi différents que les acrylates d'alkyle et/ou les dérivés styréniques, avec un excellent contrôle de la polymérisation et de la polydispersité et avec des temps de réaction de polymérisation très courts.

Ainsi, par exemple, il est possible de polymériser successivement deux monomères (ou deux mélanges de monomères) M1 et M2 :

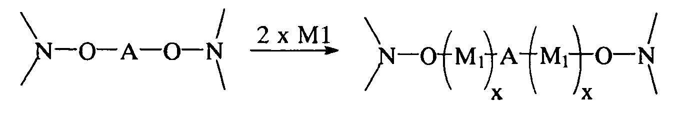

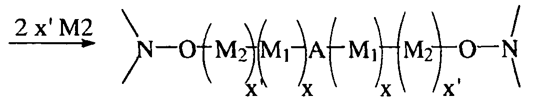

A titre d'exemple, M1=acrylate d'alkyle et M2=styrène.

A partir d'une trialcoxyamine (n=3), on obtiendra des polymères dits en étoile.

Dans le procédé de (co)polymérisation de WO 00/71501, les (co)polymères à architectures macromoléculaires contrôlées sont préparés par polymérisation radicalaire à partir de polyalcoxyamines en présence d'un excès de nitroxyde.

Alors que dans le procédé de (co)polymérisation, objet de la présente invention, les polyalcoxyamines issues d'un seul composé (I), obtenues à une température en général inférieure à 90°C, peuvent, pour des températures en général supérieures à 90°C donner naissance à toute une variété de structures macromoléculaires. De plus, le contrôle des étapes de polymérisation s'effectue sans apport de nitroxyde supplémentaire.

Les polyalcoxyamines peuvent être utilisées seules ou en présence d'autres amorceurs radicalaires comme les peroxydes organiques ou minéraux, les dérivés azoïques et/ou encore des alcoxyamines monofonctionnelles pour conduire à des produits présentant des distributions de poids moléculaires multimodales.

Les polyalcoxyamines peuvent être préparées préalablement ou simultanément à la (co)polymérisation.

La (co)polymérisation peut être réalisée dans les conditions habituelles connues de l'homme du métier compte tenu du ou des monomères considérés, en masse, en solution (aqueuse ou organique), en émulsion, en mini-émulsion ou en suspension. La température de polymérisation est en général supérieure à 90 °C.

Par monomères vinyliques, on entend les monomères vinylaromatiques tel que le styrène ou les styrènes substitués, les diènes tel que le butadiène ou l'isoprène, les monomères acryliques tel que l'acide acrylique, les acrylates d'alkyle ou d'aryle, les acrylates fonctionnels, éventuellement halogénés ou porteurs de fonctions siloxanes, les monomère méthacryliques comme l'acide méthacrylique, les méthacrylates d'alkyle ou d'aryle, les méthacrylates fonctionnels, éventuellement halogénés ou porteurs de fonctions siloxanes, comme le méthacrylate de méthyle, l'acrylonitrile, l'acrylamide ou les acrylamides substitués tels que le N,N-diméthylacrylamide, la 4-acryloylmorpholine, le méthacrylamide ou les méthacrylamides substitués, la vinylpyridine, la vinylpyrrolidinone, le chlorure de vinyle, le difluorure de vinylidène ou un mélange d'au moins deux monomères précités.

Les polymères obtenus sont des (co)polymères vivants polyfonctionnels porteurs de fonctions alcoxyamines. Ils peuvent être eux même réengagés une ou plusieurs fois dans un procédé de polymérisation radicalaire avec les monomères vinyliques précités pour conduire à des copolymères blocs à structure linéaire, étoilée, ou hyperbranchée que l'on peut caractériser par GPC (Gel Permeation Chromatography), LAC (Liquid Adsorption Chromatography) et DMA (Dynamic Mechanical Analysis).

Les exemples qui suivent illustrent l'invention.

### EXEMPLE 1 : PREPARATION D'UNE POLYALCOXYAMINE A PARTIR DE MONOALCOXYAMINE AVEC R₁=CH₃ ET R₂=H ET DU 1,4-BUTANEDIOL DIACRYLATE

### A- Synthèse de la monoalcoxyamine de formule (I) où R₁=CH₃ et R₂= H (acide 2-méthyl-2-[N-tertiobutyl-N-(1-diéthoxyphosphoryl-2,2-dimé-thylpropyl) aminoxy] propionique)

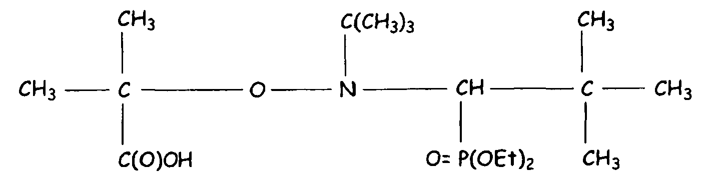

Dans un réacteur en verre de 2 I purgé à l'azote, on introduit 500 ml de toluène dégazé, 35,9 g de CuBr (250 mmol), 15,9 g de cuivre en poudre (250 mmol), 86,7 g de N,N,N',N',N"-pentaméthyl-diéthylènetriamine-PMDETA-(500 mmol) puis, sous agitation et à température ambiante (20°C), on introduit un mélange contenant 500 ml de toluène dégazé, 42,1 g d'acide 2-bromo-2-méthylpropionique (250 mmol) 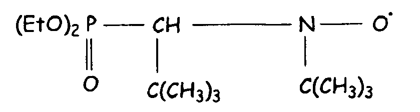 et 78,9 g de nitroxyde de formule
84 % soit 225 mmol.

On laisse réagir 90 min à température ambiante et sous agitation, puis on filtre le milieu réactionnel. Le filtrat toluénique est lavé deux fois avec 1,5 I d'une solution aqueuse saturée en NH₄Cl.

On obtient un solide jaunâtre qui est lavé au pentane pour donner 51 g d'acide 2-méthyl-2-[N-tertiobutyl-N-(1-diéthoxyphosphoryl-2,2-diméthylpropyl) aminoxy] propionique (rendement 60 %)

Les résultats analytiques sont donnés ci-après :
- masse molaire déterminée par spectrométrie de masse : 381,44 g.mol⁻¹ (pour C₁₇H₃₆NO₆P)
- analyse élémentaire (formule brute : C₁₇H₃₆NO₆P):
   % calculé : C=53,53, H=9,51, N=3,67 % trouvé : C=53,57, H=9,28, N=3,77
- fusion effectuée sur appareil Büchi B-540 : 124°C / 125°C 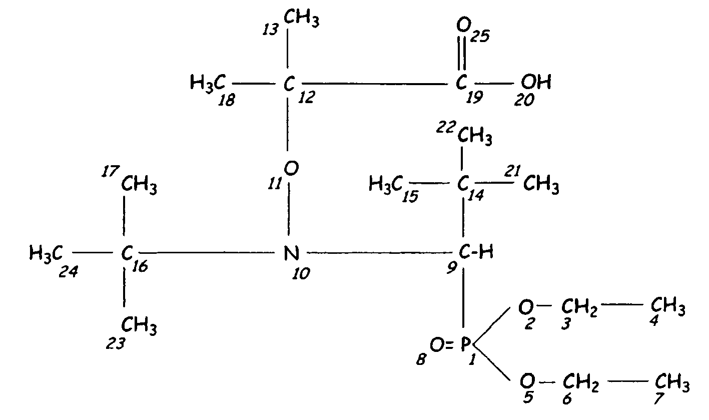
   - RMN ³¹P (CDCl₃) : δ 27,7
   - RMN ¹H (CDCl₃) :
      δ 1,15 (singulet, 9H sur carbones 15, 21 et 22),
      δ 1,24 (singulet, 9H sur carbones 17, 23 et 24),
      δ 1,33-1,36 (multiplet, 6H sur carbones 4 et 7),
      δ 1,61 (multiplet, 3H sur carbone 18),
      δ 1,78 (multiplet, 3H sur carbone 13),
      δ 3,41 (doublet, 1H sur carbone 9),
      δ 3,98-4,98 (multiplet, 4H sur carbone 3 et 6)
      δ 11,8 (singulet ―OH).
   - RMN ¹³C (CDCl₃) :

| N° atome de carbone | δ |
|---|---|
| 3 et 6 | 60,28 - 63,32 |
| 9 | 69,86 |
| 12 | 63 |
| 13 | 28,51 |
| 14 | 36,04 |
| 15, 21 et 22 | 29,75 |
| 16 | 63,31 |
| 17, 23 et 24 | 28,74 |
| 18 | 24,08 |
| 19 | 176,70 |

kd (120°C) = 0,2 s⁻¹.

### B-préparation de la polyalcoxyamine

Dans un ballon de 100 ml purgé à l'azote, on introduit :
- 2 g d'alcoxyamine préparé sous A (2,1 équivalents)
- 0,55 g de 1,4-butanediol diacrylate commercialisé par Aldrich de pureté 90 % (1 équivalent)
- 5,7 ml d'éthanol

On chauffe à reflux (température 78°C) pendant 20 h, puis l'éthanol est évaporé sous vide. On obtient 2,5 g d'une huile jaune très visqueuse.

L'analyse RMN ³¹P montre la disparition totale de l'alcoxyamine acide méthacrylique-SG1 (27,4 ppm) et l'apparition de la dialcoxyamine (multiplet à 24,7-25,1 ppm)

L'analyse par spectrométrie de masse de type electrospray montre la masse 961 (M+).

### EXEMPLE 2 : PREPARATION D'UN COPOLYMERE TRIBLOC LINEAIRE MAM-ABU-MAM EN MILIEU SOLVANT

Dans un réacteur de 1 L équipé d'une double enveloppe, 320 g (soit 2,5 mol) d'acrylate de butyle et 6.8 g (soit 7.1 mmol) de polyalcoxyamine préparée à l'exemple 1 sont introduits à température ambiante. Après plusieurs dégazages à l'azote, le milieu réactionnel est porté à 115°C et cette température est maintenue par régulation thermique pendant 5 h. Des prélèvements sont réalisés tout au long de la réaction afin de :
- déterminer la cinétique de la polymérisation par gravimétrie (mesure d'extraits secs) ;
- suivre l'évolution des masses moléculaires en fonction de la conversion.

Lorsque la conversion de 80 % est atteinte, le milieu réactionnel est refroidi à 60°C, et l'acrylate de butyle résiduel est éliminé par évaporation sous vide.

A 60 °C, 391 g (soit 3,7 mol) de méthacrylate de méthyle et 78 g de toluène sont alors additionnés. Le milieu réactionnel est ensuite chauffé à 95 °C pendant 2 h (conversion=50%). Après retour à 60 °C et dilution avec 78 g de toluène, le copolymère MAM-Abu-MAM est soutiré du réacteur et les monomère et solvant résiduels sont éliminés par évaporation sous vide.

Le copolymère MAM-Abu-MAM est analysé par GPC (Gel Permeation Chromatography), LAC (Liquid Adsorption Chromatography technique HPLC à gradient de solvant qui permet de séparer les polymères selon leur composition chimique et est indépendante de leur masse molaire dans des conditions expérimentales définies. Les propriétés rhéologiques du polymères obtenu sont illustrée par une étude DMA (Dynamic Mechanical Analysis).

➢Caractérisation par GPC (Gel Permeation Chromatography)

| Exemple 2 | Mn | Mw | Mp | Ip |
|---|---|---|---|---|
| PABu | 23200 | 29780 | 29690 | 1.3 |
| PMAM-PABu-PMAM | 62 110 | 124 500 | 98910 | 2.0 |

Les masses molaires sont exprimées en équivalents PMMA.

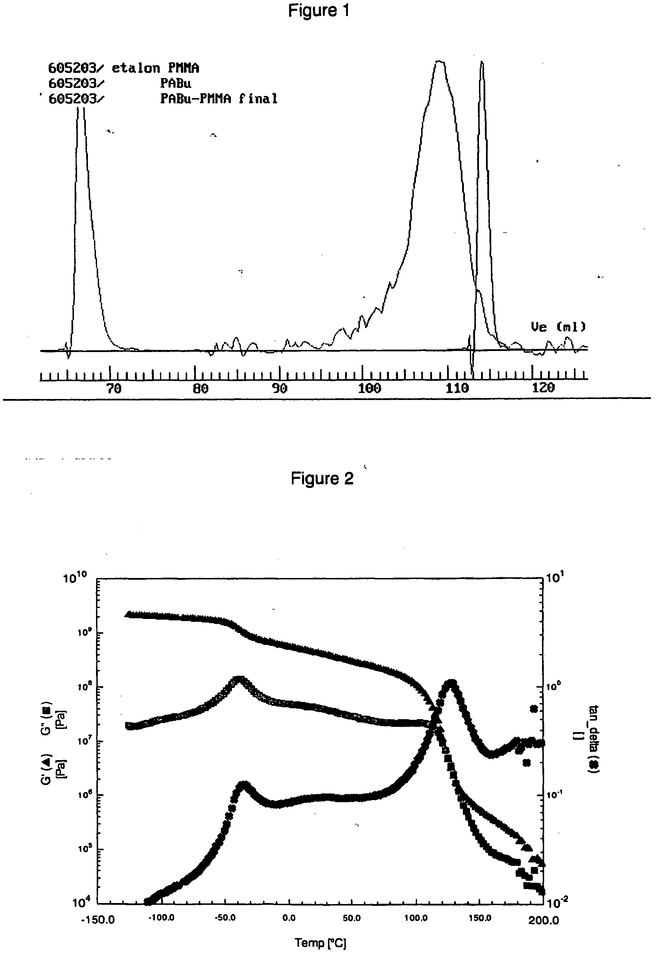

➢Caractérisation par LAC (Liquid Adsorption Chromatography) voir Figure 1

Le chromatogramme présenté à la Figure 1 représente la superposition des chromatogrammes obtenus par LAC pour le polymère PAbu synthétisé au cours de la première étape, le copolymère final PMMA/PAbu/PMMA ainsi qu'un étalon de PMMA. Le pic correspondant au PAbu initial présente un volume d'élution de l'ordre de 67 ml, alors que le pic du copolymère final se déplace nettement vers la zone plus riche en PMMA (Volume d'élution = 110 ml). Cette différence très nette du volume d'élution entre ces 2 pics montre clairement un changement interne de la composition des chaînes du polymère, et constitue la preuve d'un réamorçage des chaînes de PAbu vivantes, et d'un accrochage du motifs MMA.

➢ Caractérisation par DMA (Dynamic Mechanical Analysis) voir Figure 2

La DMA du copolymère PMAM-PABu-PMAM a été réalisée sur un viscoélasticimètre à déformation imposée (Ares) La géométrie utilisée est la torsion rectangulaire pour une gamme de température comprise entre -125°C et 200°C à la fréquence de 1 Hz. L'échantillon sous forme de plaque a été moulé par compression à 170°C.

La courbe obtenue montre bien un plateau caoutchoutique compris entre les transitions vitreuses des deux types de blocs. Le module G' reflète la composition chimique moyenne du polymère obtenu.

| Référence | Tg (Abu) | Tg | Tg(PMMA) |
|---|---|---|---|
| PMMA-PABu-PMMA | -34.9 | 29.3 | 127 |

### Exemple 3 :Préparation d'un copolymère tribloc linéaire MAM-ABu-MAM en milieu dispersé

La préparation du copolymère tribloc MAM-Abu-MAM se fait en 3 étapes :

D'une part, on prépare une solution organique en mélangeant :
- 148 g (soit 1,2 mol) d'acrylate de butyle,
- 2,9 g (soit 3,0 mmol) de polyalcoxyamine préparée à l'exemple 1,
- 0,15 g d'un polystyrène de masse moléculaire moyenne en poids (Mw) de 300 000
- 1,33 g (soit 5,9 mmol) d'hexadécane,

D'autre part, on prépare une solution aqueuse en mélangeant :
- 595 g d'eau,
- 3,33 g (soit 4,0 mmol) d'agent émulsifiant Dowfax 8390 ® commercialisé par Dow Chemical (mélange de mono- et de di-hexadecyl disulfonate diphenyl oxyde disodium)
- 0,64 g (soit 7,6 mmol) de NaHCO₃,

Ces 2 solutions sont ensuite mélangées à l'aide d'une agitation magnétique pendant 10 min. Le mélange est ensuite soumis à une forte turbulence par une sonde ultra-son très puissante (de type Branson 450, puissance 7) pendant 10 min de façon à obtenir une émulsion dont la taille des gouttes est de l'ordre de 10 nm.

L'émulsion est ensuite introduite dans un réacteur de 1 L équipé d'une double enveloppe, et dégazée à l'azote pendant 10 min. Le milieu réactionnel est alors porté à 120 °C et cette température est maintenue par régulation thermique pendant 5 h. Des prélèvements sont réalisés tout au long de la réaction afin de :
- déterminer la cinétique de la polymérisation par gravimétrie (mesure d'extraits secs),
- suivre l'évolution des masses moléculaires en fonction de la conversion.

Lorsque la conversion de 70 % est atteinte, le milieu réactionnel est refroidi à température ambiante et, à cette même température, une solution contenant 78 g (soit 0,7 mol) de méthacrylate de méthyle, 269 g d'eau et 1,9 g (soit 2,3 mmol) d'agent émulsifiant Dowfax 8390 est additionnée.

Le milieu réactionnel est ensuite chauffé à 100 °C pendant 6 h (conversion=70%), puis refroidi à température ambiante. Une solution contenant 0,2 g (soit 0,7 mmol) de persulfate de potassium dans 8 g d'eau est alors additionnée pour éliminer les traces de monomères résiduels. Après chauffage à 75 °C pendant 2 h, et retour à température ambiante, le latex est soutiré du réacteur.

Le latex est ensuite analysé par CHDF (Capillary Hydrodynamic Fractionation), GPC (Gel Permeation Chromatography), LAC (Liquid Adsorption Chromatography) et DMA (Dynamic Mechanical Analysis)

## Revendications

1. Procédé de préparation de polyalcoxyamines porteuses de fonctions : 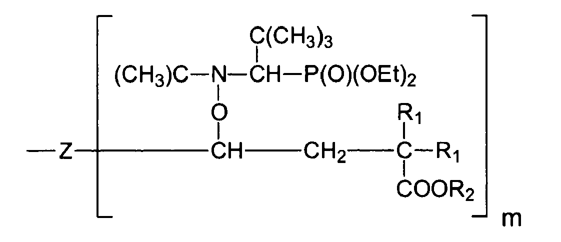 où m est un entier inférieur ou égal à n et supérieur ou égal à 2, consistant à faire réagir , de préférence sous atmosphère d'azote, au moins une monoalcoxyamine(s) de formule (I) 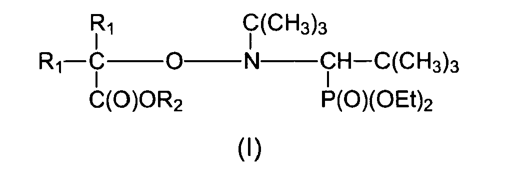 dans laquelle R₁ représente un radical alkyle, linéaire ou ramifié, ayant un nombre d'atomes de carbone allant de 1 à 3, R₂ représente un atome d'hydrogène, un radical alkyle, linéaire ou ramifié, ayant un nombre d'atomes de carbone allant de 1 à 8, un radical phényle, un métal alcalin tel que Li, Na, K, un ion ammonium tel que NH₄⁺, NBu₄⁺, NHBu₃⁺ ; de préférence, R₁ est CH₃ et R₂ est H ;
avec au moins un composé polyinsaturé de formule (II) : 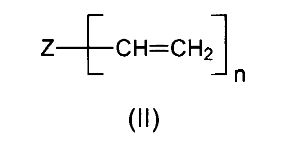 dans laquelle Z est un groupement aryle ou peut être représenté par la formule Z₁,-[X-C(O)]ₙ où Z₁ représente une structure polyfonctionnelle provenant par exemple d'un composé de type polyol, X est un atome d'oxygène, un atome d'azote porteur d'un groupement carboné ou encore un atome d'hydrogène, X pouvant aussi être un atome de soufre, et n est un nombre entier supérieur ou égal à 2,
en présence ou non de solvant (s), de préférence choisi(s) parmi les alcools comme l'éthanol, les solvants aromatiques, les solvants chlorés, les éthers, les solvants polaires aprotiques,
à une température de réaction comprise de préférence entre 0 et 90 °C, le ratio molaire entre monoalcoxyamine(s) de formule (1) et composé(s) polyinsaturé(s) de formule (11) étant compris entre 1,5 et 1,5n, de préférence entre n et 1,25n,
éventuellement suivie par une étape d'évaporation du ou des éventuels solvants.

2. Procédé selon la revendication 1 **caractérisé en ce que** le solvant est un alcool.

3. Procédé selon la revendication 1 ou 2 **caractérisé en ce que** la température de réaction est comprise entre 25 et 80°C.

4. Procédé selon l'une des revendications 1 à 3, **caractérisé en ce que** le composé polyfonctionnel est choisi parmi le divinylbenzène, le trivinylbenzène, l'éthylène glycol diacrylate, le 1,3-butanediol diacrylate, le 1,4-butanediol diacrylate, le 1,6-hexanediol diacrylate, le néopentyl glycol diacrylate, le cyclohexane diméthanol diacrylate, le diéthylène glycol diacrylate, le triéthylène glycol diacrylate, le tétraéthylène glycol diacrylate, le dipropylèneglycol diacrylate, le tripropylèneglycol diacrylate, les polyéthylène glycol diacrylates, les hexanediol diacrylates alcoxylés, le bisphénol-A diacrylate, les bisphénol A diacrylate éthoxylés, le triméthylolpropane triacrylate, le pentaérythritol triacrylate, le tris(2-hydroxyéthyl)isocyanurate triacrylate, les triméthylolpropane triacrylate éthoxylés, le glycéryl triacrylate propoxylé, les triméthylolpropane triacrylate propoxylés, le pentaérythritol tétraacrylate, le di-triméthylolpropane tétracrylate, le pentaérythritol tétraacrylate éthoxylé, le dipentaérythritol pentacrylate, les caprolactones modifiées dipentaérythritol hexaacrylate ou dipentaérythritol pentacrylate.

5. Procédé de préparation de (co)polymères vivants polyfonctionnels par polymérisation par voie radicalaire d'un ou plusieurs monomères vinyliques en présence des polyalcoxyamines préalablement préparées selon le procédé décrit à l'une des revendications 1 à 4.

6. Procédé de préparation de (co)polymères vivants polyfonctionnels selon la revendication 5, **caractérisé en ce que** les polyalcoxyamines sont préparées préalablement à la (co)polymérisation.

7. Procédé de préparation de (co)polymères vivants polyfonctionnels selon la revendication 5, **caractérisé en ce que** les polyalcoxyamines sont préparées simultanément à la (co)polymérisation.

8. Procédé selon la revendication 5 **caractérisé en ce qu**'il est réalisé en masse, en solution (aqueuse ou organique), en émulsion, en mini-émulsion ou en suspension et que la température de polymérisation est de préférence supérieure à 90 °C.

9. Procédé selon l'une quelconque des revendications 5 à 8, **caractérisé en ce que** les monomères vinyliques sont choisis parmi le styrène ou les styrènes substitués, les diènes tel que le butadiène ou l'isoprène, les monomères acryliques tel que l'acide acrylique, les acrylates d'alkyle ou d'aryle, les acrylates fonctionnels, éventuellement halogénés ou porteurs de fonctions siloxanes, les monomère méthacryliques comme l'acide méthacrylique, les méthacrylates d'alkyle ou d'aryle, les méthacrylates fonctionnels, éventuellement halogénés ou porteurs de fonctions siloxanes, comme le méthacrylate de méthyle, l'acrylonitrile, l'acrylamide ou les acrylamides substitués tels que le N,N-diméthylacrylamide, la 4-acryloylmorpholine, le méthacrylamide ou les méthacrylamides substitués, la vinylpyridine, la vinylpyrrolidinone, le chlorure de vinyle, le difluorure de vinylidène ou un mélange d'au moins deux monomères précités.

10. Procédé de (co)polymérisation selon l'une quelconque des revendications 5 à 9 pour la synthèse de (co)polymères vivants polyfonctionnels à architectures macromoléculaires contrôlées ((co)polymères blocs à structure linéaire, étoilée, ou hyperbranchée....)

11. Procédé de (co)polymérisation selon l'une quelconque des revendications 5 à 10 en présence d'au moins un autre initiateur de polymérisation choisi parmi les peroxydes organiques ou minéraux, des composés azoïques et/ou d'autres alcoxyamines.

## Claims

1. Process for the preparation of polyalkoxyamines carrying functional groups: 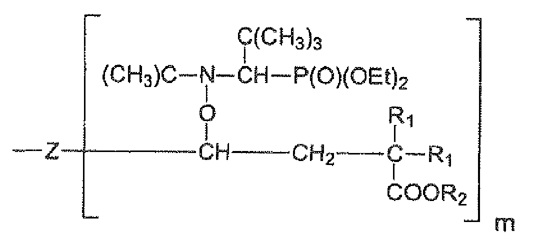 Where m is an integer lower than or equal to n and greater than or equal to 2,
which consists in reacting, preferably under a nitrogen atmosphere, at least one monoalkoxyamine(s) of formula (I) 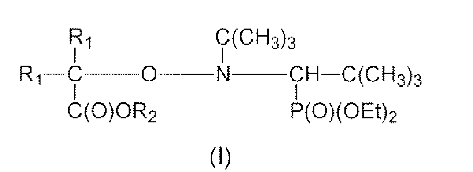 in which R₁ represents a linear or branched alkyl radical having a number of carbon atoms ranging from 1 to 3 and R₂ represents a hydrogen atom, a linear or branched alkyl radical having a number of carbon atoms ranging from 1 to 8, a phenyl radical, an alkali metal, such as Li, Na or K, or an ammonium ion, such as NH₄⁺, NBu₄⁺ or NHBu₃⁺; preferably, R₁ is CH₃ and R₂ is H;
with at least one polyunsaturated compound of formula (II): 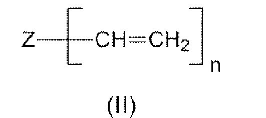 in which Z is an aryl group or can be represented by the formula Z₁-[X-C(O)]ₙ where Z₁ represents a polyfunctional structure originating, for example from a compound of polyol type, X is an oxygen atom, a nitrogen atom carrying a carbonaceous group or alternatively a hydrogen atom, it also being possible for X to be a sulphur atom, and n is an integer greater than or equal to 2,
in the presence or absence of solvent(s) preferably chosen from alcohols, such as ethanol, aromatic solvents, chlorinated solvents, ethers or polar aprotic solvents,
at a reaction temperature preferably of between 0 and 90°C,
the molar ratio of monoalkoxyamine(s) of formula (I) to polyunsaturated compound(s) of formula (II) being between 1.5 and 1.5n, preferably between n and 1.25n,
optionally followed by a stage of evaporation of the optional solvent or solvents.

2. Process according to Claim 1, **characterized in that** the solvent is an alcohol.

3. Process according to Claim 1 or 2, **characterized in that** the reaction temperature is between 25 and 80°C.

4. Process according to one of Claims 1 to 3, **characterized in that** the polyfunctional compound is chosen from divinylbenzene, trivinylbenzene, ethylene glycol diacrylate, 1,3-butanediol diacrylate, 1,4-butanediol diacrylate, 1,6-hexanediol diacrylate, neopentyl glycol diacrylate, cyclohexanedimethanol diacrylate, diethylene glycol diacrylate, triethylene glycol diacrylate, tetraethylene glycol diacrylate, dipropylene glycol diacrylate, tripropylene glycol diacrylate, polyethylene glycol diacrylates, hexanediol alkoxylate diacrylates, bisphenol A diacrylate, bisphenol A ethoxylate diacrylates, trimethylolpropane triacrylate, pentaerythritol triacrylate, tris(2-hydroxyethyl) isocyanurate triacrylate, trimethylolpropane ethoxylate triacrylates, glyceryl propoxylate triacrylate, trimethylolpropane propoxylate triacrylates, pentaerythritol tetraacrylate, ditrimethylolpropane tetraacrylate, pentaerythritol ethoxylate tetraacrylate, dipentaerythritol pentaacrylate, caprolactone modified dipentaerythritol hexaacrylates or dipentaerythritol pentaacrylate.

5. Process for the preparation of polyfunctional living (co)polymers by polymerization by the radical route of one or more vinyl monomers in the presence of the polyalkoxyamines prepared beforehand according to the process described in one of Claims 1 to 4.

6. Process for the preparation of polyfunctional living (co)polymers according to Claim 5, **characterized in that** the polyalkoxyamines are prepared prior to the (co)polymerization.

7. Process for the preparation of polyfunctional living (co)polymers according to Claim 5, **characterized in that** the polyalkoxyamines are prepared simultaneously with the (co)polymerization.

8. Process according to Claim 5, **characterized in that** it is carried out in bulk, in solution (aqueous or organic), in emulsion, in miniemulsion or in suspension and that the polymerization temperature is preferably greater than 90°C.

9. Process according to any one of Claims 5 to 8, **characterized in that** the vinyl monomers are chosen from styrene or substituted styrenes, dienes, such as butadiene or isoprene, acrylic monomers, such as acrylic acid, alkyl or aryl acrylates or functional acrylates which are optionally halogenated or carriers of siloxane functional groups, methacrylic monomers, such as methacrylic acid, alkyl or aryl methacrylates or functional methacrylates which are optionally halogenated or carriers of siloxane functional groups, such as methyl methacrylate, acrylonitrile, acrylamide or substituted acrylamides, such as N,N-dimethylacrylamide, 4-acryloylmorpholine, methacrylamide or substituted methacrylamides, vinylpyridine, vinylpyrrolidinone, vinyl chloride, vinylidene difluoride or a mixture of at least two abovementioned monomers.

10. (Co)polymerization process according to any one of Claims 5 to 9 for the synthesis of polyfunctional living (co)polymers with controlled macromolecular architectures (block (co)polymers with a linear, star or hyperbranched structure or the like).

11. (Co)polymerization process according to any one of Claims 5 to 10 in the presence of at least one other polymerization initiator chosen from organic or inorganic peroxides, azo compounds and/or other alkoxyamines.

## Patentansprüche

1. Verfahren zur Herstellung von Polyalkoxyaminen mit Funktionen: 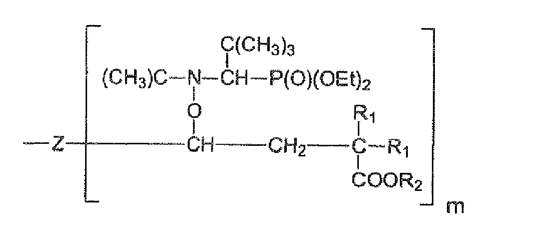 worin m für eine ganze Zahl kleiner gleich n und größer gleich 2 steht,
bei dem man, vorzugsweise unter Stickstoffatmosphäre, mindestens ein Monoalkoxyamin der Formel (I) 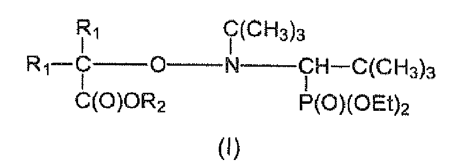 worin R₁ für einen linearen oder verzweigten Alkylrest mit 1 bis 3 Kohlenstoffatomen steht, R₂ für ein Wasserstoffatom, einen linearen oder verzweigten Alkylrest mit 1 bis 8 Kohlenstoffatomen, einen Phenylrest, ein Alkalimetall wie Li, Na oder K oder ein Ammoniumion wie NH₄⁺, NBu₄⁺ oder NHBU₃⁺ steht und vorzugsweise R₁ für CH₃ und R₂ für H steht;
gegebenenfalls in Gegenwart eines oder mehrerer Lösungsmittel, vorzugsweise ausgewählt unter Alkoholen wie Ethanol, aromatischen Lösungsmitteln, chlorierten Lösungsmitteln, Ethern und polaren aprotischen Lösungsmitteln,
bei einer Reaktionstemperatur von vorzugsweise zwischen 0 und 90°C
mit einer mehrfach ungesättigten Verbindung der Formel (11): 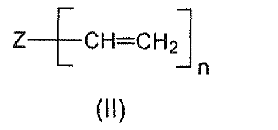 worin Z für eine Arylgruppe steht oder durch die Formel Z₁-[X-C(O)]ₙ, worin Z₁ für eine polyfunktionelle Struktur steht, die sich beispielsweise von einer Verbindung vom Polyoltyp ableitet, X für ein Sauerstoffatom, ein Stickstoffatom mit einer kohlenstoffhaltigen Gruppe oder auch einem Wasserstoffatom steht, wobei X auch für ein Schwefelatom stehen kann, und n für eine ganze Zahl größer gleich 2 steht, wiedergegeben werden kann, umsetzt, wobei das Molverhältnis zwischen Monoalkoxyamin(en) der Formel (I) und mehrfach ungesättigter Verbindung bzw. mehrfach ungesättigten Verbindungen der Formel (II) zwischen 1,5 und 1,5n, vorzugsweise zwischen n und 1,25n, liegt,
und danach gegebenenfalls das fakultative Lösungsmittel bzw. die fakultativen Lösungsmittel verdampft.

2. Verfahren nach Anspruch 1, **dadurch gekennzeichnet, daß** es sich bei dem Lösungsmittel um einen Alkohol handelt.

3. Verfahren nach Anspruch 1 oder 2, **dadurch gekennzeichnet, daß** die Reaktionstemperatur zwischen 25 und 80°C liegt.

4. Verfahren nach einem der Ansprüche 1 bis 3, **dadurch gekennzeichnet, daß** man die polyfunktionelle Verbindung unter Divinylbenzol, Trivinylbenzol, Ethylenglykoldiacrylat, 1,3-Butandioldiacrylat, 1,4-Butandioldiacrylat, 1,6-Hexandioldiacrylat, Neopentylglykoldiacrylat, Cyclohexandimethanoldiacrylat, Diethylenglykoldiacrylat, Triethylenglykoldiacrylat, Tetraethylenglykoldiacrylat, Dipropylenglykoldiacrylat, Tripropylenglykoldiacrylat, Polyethylenglykoldiacrylaten, alkoxylierten Hexandioldiacrylaten, Bisphenol-A-diacrylat, ethoxylierten Bisphenol-A-diacrylaten, Trimethylolpropantriacrylat, Pentaerythrittriacrylat, Tris(2-hydroxyethyl)isocyanurattriacrylat, ethoxylierten Trimethylolpropantriacrylaten, propoxyliertem Glyceryltriacrylat, propoxylierten Trimethylolpropantriacrylaten, Pentaerythrittetraacrylat, Ditrimethylolpropantetraacrylat, ethoxyliertem Pentaerythrittetraacrylat, Dipentaerythritpentaacrylat, caprolactonmodifizierten Dipentaerythrithexaacrylaten oder Dipentaerythritpentaacrylat auswählt.

5. Verfahren zur Herstellung von polyfunktionellen lebenden (Co)polymeren durch radikalische Polymerisation eines oder mehrerer Vinylmonomere in Gegenwart von vorher nach dem in einem der Ansprüche 1 bis 4 beschriebenen Verfahren hergestellten Polyalkoxyaminen.

6. Verfahren zur Herstellung von polyfunktionellen lebenden (Co)polymeren nach Anspruch 5, **dadurch gekennzeichnet, daß** man die Polyalkoxyamine vor der (Co)polymerisation herstellt.

7. Verfahren zur Herstellung von polyfunktionellen lebenden (Co)polymeren nach Anspruch 5, **dadurch gekennzeichnet, daß** man die Polyalkoxyamine gleichzeitig mit der (Co)polymerisation herstellt.

8. Verfahren nach Anspruch 5, **dadurch gekennzeichnet, daß** man es in Substanz, in Lösung (wäßrig oder organisch), in Emulsion, in Miniemulsion oder in Suspension durchführt und die Polymerisationstemperatur vorzugsweise mehr als 90°C beträgt.

9. Verfahren nach einem der Ansprüche 5 bis 8, **dadurch gekennzeichnet, daß** man die Vinylmonomere unter Styrol oder substituierten Styrolen, Dienen wie Butadien oder Isopren, Acrylmonomeren wie Acrylsäure, Alkyl- oder Arylacrylaten, funktionellen Acrylaten, die gegebenenfalls halogeniert sind oder Siloxanfunktionen tragen, Methacrylmonomeren wie Methacrylsäure, Alkyl- oder Arylmethacrylaten, funktionellen Methacrylaten, die gegebenenfalls halogeniert sind oder Siloxanfunktionen tragen, wie Methylmethacrylat, Acrylnitril, Acrylamid oder substituierten Acrylamiden wie N,N-Dimethylacrylamid, 4-Acryloylmorpholin, Methacrylamid oder substituierten Methacrylamiden, Vinylpyridin, Vinylpyrrolidinon, Vinylchlorid, Vinylidendifluorid oder einer Mischung aus mindestens zwei der oben aufgeführten Monomere auswählt.

10. (Co)polymerisationsverfahren nach einem der Ansprüche 5 bis 9 zur Synthese von polyfunktionellen lebenden (Co)polymeren mit gesteuerten makromolekularen Architekturen (Block(co)polymere mit linearer, sternförmiger oder hyperverzweigter Struktur usw.).

11. (Co)polymerisationsverfahren nach einem der Ansprüche 5 bis 10 in Gegenwart mindestens eines anderen Polymerisationsinitiators, ausgewählt unter organischen oder anorganischen Peroxiden, Azoverbindungen und/oder anderen Alkoxyaminen.
